(19) Europäisches Patentamt
European Patent Office
Office européen des brevets

(11) **EP 3 808 705 A1**

(12) **EUROPEAN PATENT APPLICATION**

(43) Date of publication:
**21.04.2021  Bulletin 2021/16**

(51) Int Cl.:
***C01G 49/02*** (2006.01)          ***C09C 1/24*** (2006.01)
***C01G 49/06*** (2006.01)

(21) Application number: **20201761.2**

(22) Date of filing: **23.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.01.2018  EP 18153657**

(62) Document number(s) of the earlier application(s) in accordance with Art. 76 EPC:
**19701352.7 / 3 743 383**

(71) Applicant: **LANXESS Deutschland GmbH**
**50569 Köln (DE)**

(72) Inventors:
 • **Rosenhahn, Carsten**
   **47906 Kempen (DE)**
 • **Müller, Rolf**
   **47829 Krefeld (DE)**
 • **Schaufler, Larissa**
   **45149 Essen (DE)**
 • **Kathrein, Christine**
   **41515 Grevenbroich (DE)**
 • **Weber-Czaplik, Anna**
   **40474 Düsseldorf (DE)**
 • **Taylor Klupp, Robin**
   **91301 Forchheim (DE)**
 • **Golkar, Saeedeh**
   **91077 Neukirchen am Brand (DE)**

Remarks:
This application was filed on 14-10-2020 as a divisional application to the application mentioned under INID code 62.

(54) **PROCESS FOR THE MANUFACTURING OF GOETHITE PIGMENTS**

(57)    A process for manufacturing goethite containing the steps:

a) Dissolution of ferric (III) nitrate in water

b) Treatment of the solution obtained according to step a) at a temperature in the range of 55° to 65° C,

c) Isolating the goethite from the suspension obtained according to step b)

d) Suspending the isolated goethite of step c) in water

e) Treating the suspension of step d) hydrothermally at a temperature of 120 to 220 °C, preferably of 150 to 200 °C under autogenous pressure.

Printed by Jouve, 75001 PARIS (FR)

## Description

The present invention relates to a process for making goethite pigments, respective goethite pigments and its use.

## Prior Art

Yellow iron oxide pigments comprising the $\alpha$-FeOOH (goethite) phase in the form of sub-micron particles are known in the art. The coloring properties of such yellow iron oxide pigments are substantially determined by the distribution of particle size and shape, as well as particle internal structure and the state of particle agglomeration.

In general, like described in DE 2 455 158 A1, $\alpha$-FeOOH (yellow iron oxide) is prepared from iron (II) salts by the precipitation process or by the known Penniman process. In both processes a seed is produced first of all, onto which then, in a further step, relatively slowly, additional $\alpha$-FeOOH is caused to grow.

$\alpha$-FeOOH particles which have been prepared by the processes mentioned above generally crystallize in a very definite needle shape. The scattering and absorption coefficients perpendicular and parallel to the needle axis differ considerably. If the needles are first arranged perpendicular and then parallel to the direction of observation, considerable color differences are visible to the observer. This effect is called the silking effect because it can also be observed on silk fabrics. With reference to iron oxide pigments the silking effect is a particular nuisance in the case of lacquers which are applied in one direction (so-called image framework effect) and as a result of the alignment of pigments during the extrusion and calendering of plastics and plastic foils.

Patent DE-A1-33 26 632 describes processes for preparing iron oxide yellow pigments with a low silking effect. Elimination of the silking effect is achieved in that highly dendritic needles are produced which grow together to give spheroidal aggregates (like little "hedgehogs"). These approximately isometric aggregates can no longer be aligned in specific preferred directions. A disadvantage of such a pigment based on highly dendritic particles is that they are sensitive to milling so that the values for the yellow index b* which is obtained by some light yellow iron oxide pigments with a silking effect, will be decreased.

Looking into the prior art one can find spherical goethite pigments, which are not built out of needles. Reference is made to Fu et al in Phys. Chem. Chem. Phys., 2011, 13, 18523 to 18529, "Iron oxyhydroxide nanoparticles formed by forced hydrolysis: dependence of phase composition on solution concentration" and also other academic papers investigating such spherical iron oxide particles. These particles are prepared from iron (III) nitrate in water at about 60 °C. All of these synthesis routes are however very sensitive towards all kinds of impurities so that a high level of purification is required which only can be afforded in magnitudes of lab scale. Furthermore, the coloristic properties obtained by these processes are not satisfactory.

It was therefore an object of this invention to provide a new process for making goethite which overcomes these drawbacks, in particular with respect to known spherical goethite as such.

Surprisingly it was found that such pigments can be prepared by a process for manufacturing goethite containing the steps:

a) dissolution of ferric (III) nitrate in water,

b) treatment of the solution obtained according to step a) at a temperature in the range of 55 to 65 °C, in particular for 10 h or more,

c) isolating the goethite from the suspension obtained according to step b)

d) suspending the isolated goethite of step c) in water and

e) treating the suspension of step d) hydrothermally at a temperature of 170 to 220 °C under autogenous pressure, in particular for 1h or more.

## Step a)

The ferric nitrate that is preferably used in step a) is $Fe(NO_3)_3$x$9H_2O$. Even more preferred the ferric nitrate has a purity of > 99 wt%, in particular > 99,9 wt%. Ferric Nitrate concentration should be in a range of 0.01 to 0.12 M, preferably from 0.05 to 0.1M, in particular from 0.055 to 0.09 M, even more preferable from 0.06 to 0.065 M.

The water used in step a) for dissolving the ferric nitrate has preferably a total content of alkali and alkaline earth of smaller than 2 ppm.

The step a) is conducted preferably at a temperature of 15 to 25 °C, in particular of 20 to 25 °C. Before the temperature is increased to the value used in step b), it was found advantageous to let the solution obtained according to step a) stay for some time, preferably for 5 to 20 hours, preferably for 10 to 29 hours.

**Step b)**

After step a) the temperature of the aqueous solution is increased to a range of 55 to 65 °C. Preferably the temperature is ramped up smoothly, in particular with a rate of 2.5 K/min or less, preferably lower. The reaction taking place is assumed to follow the general chemical equation:

$$Fe(NO_3)_3x9H_2O(aq) \rightarrow FeOOH\ (s) + 3HNO_3\ (aq) + 7H_2O$$

The reaction time at the achieved temperature should preferably be 10 h or longer, in particular 24 hours or longer, more preferably 48 hours or longer, most preferably 96 hours or longer. Volume changes in the reactor through evaporation of solution are preferably kept under 10 vol.-%. This can be achieved by a closed reaction vessel. During step b) an aqueous suspension is obtained.

**Step c)**

After the treatment of step b) the pigment that has been formed, precipitated and sank to the bottom of the reactor. The solids are isolated preferably by being filtered from the suspension and washed with water and optionally dried. Preferably the solid is washed with water until the conductivity is less than $1000 \mu S/c$.

**Step d)**

The pigment isolated from the treatment of step c), preferably is given to water to form an aqueous suspension with a solid content of 10 wt% or lower, preferably of 5 wt. % or lower, in particular of 2 wt% or lower, more in particular of 0.15 to 0.3 wt%, based on the aqueous suspension.

**Step e)**

The suspension prepared in step e) is then preferably treated in an autoclave and heated to a temperature in the range of 120 to 220 C, preferably to 150 to 200 C under autogenous pressure.
This so called hydrothermal treatment is done preferably for 1h or longer, more preferred for 12 to 24h. In particular the treatment is finished after 24 h.
The suspension is preferably stirred during hydrothermal treatment. The autoclave is preferably made out of stainless steel, in particular with Teflon lining.
The solids are preferably filtered from the suspension and washed with water and optionally dried.

**Pigments**

The pigments obtained according to the process of the present invention are spherical yellow pigments having:

i) an aspect ratio AR of lower than 1.5, preferably lower than 1.3, most preferably lower than 1.2 in particular lower than 1.1.
ii) a CIELAB L* value of 56 to 60, preferably of 58 to 59
iii) a CIELAB b*-value of 42 to 48, preferably of 43 to 47
iv) preferably an average particle size in the range of 100 to 600 nm

Hence, such pigments as such are also part of this invention, whereby the pigment obtained according to the above mentioned process is goethite, preferably containing more than 99 wt% of $\alpha$-goethite.

**Feature i)**

The aspect ratio AR can be determined by the different techniques to measure or determine aspect ratios reported in the literature. A vast number of studies (Baudet et al., 1993; Jennings and Parslow, 1988; Lohmander, 2000; Pabst et al., 2000 Pabst et al., 2001 Pabst et al., 2006a Pabst et al., b, 2007 Slepetys and Cleland, 1993) described how laser ensemble diffraction and single particle light scattering (static and dynamic) offer an opportunity to measure aspect ratios.
The aspect ratio AR can also be determined from scanning or transmission electron microscope images for a statistically relevant number of particles and their distribution characteristics (mean, standard deviation) computed. To determine the AR preferably an ellipse is fitted to each particle to give $AR_E$ which is the ratio of the major ellipse axis length to the minor ellipse axis length.

**Feature ii)**

The L* value of the CIELAB system is measured in the surface coating test customary for iron oxide pigments using as method the DIN EN ISO 11664-4:2011-07 and DIN EN ISO 787-25:2007) in a defined alkyd resin having a thixotropic effect.

**Feature iii)**

The b* value of the CIELAB system is measured in the surface coating test customary for iron oxide pigments using as method the DIN EN ISO 11664-4:2011-07 and DIN EN ISO 787-25:2007) in a defined alkyd resin having a thixotropic effect.

**Feature iv)**

The particle size is more preferably within the range of 150 to 500 nm, most preferably in the range of 200 to 400 nm.
The BET specific surface area of the inventive pigments is preferably in the range of 10 to 60 $m^2$/g, in particular 10 to 40 $m^2$/g, more preferred 10 to 20 $m^2$/g. The BET specific surface area can be determined by the method described in DIN-ISO 9277.
The invention also refers to goethite pigments, also considered as inventive pigments having

i) an aspect ratio AR of lower than 1.5, preferably lower than 1.3, most preferably lower than 1.2 in particular lower than 1.1.
ii) a CIELAB L* value of 58 to 59,
iii) a CIELAB b*-value of 43 to 47
iv) and a delta b* < 0.6, preferably < 0.5, determined after milling according to the method described below
v) and preferably an average particle size in the range of 100 to 600 nm.

The measurement of the features is done in the same way as mentioned above. The delta b*-value is the difference of the respective b*-values determined before and after the milling of the respective pigments, whereby the milling method is preferably a treatment of the pigment done with a 10 mm agate ball in a vibrating ball mill at a frequency of 2000 $min^{-1}$ for 2 minutes, preferably with a pigment sample of 0,5 g.

**Use of inventive pigments**

The invention also refers to the use of the inventive pigments as defined above for coloring products of the ink, paint, coating, building material, plastic and paper industries, in foods, in baking varnishes or coil coatings, in sand granules, sand-lime bricks, enamels and ceramic glazes and in products of the pharmaceutical industry, particularly in tablets. In particular the inventive pigments are preferably used in paints and coatings.

**Examples**

**Methods: Measurement of L* and b***

To measure the pigment color according to DIN EN ISO 11664-4:2011-07 and DIN EN ISO 787-25:2007) in a defined alkyd resin which preferably is Setal® F 48, the pigment is dispersed in a coating system based on a mid-oil alkyd. The mill base is used to prepare paint films that are dried and colorimetrically evaluated in comparison to a reference system.
A detailed description of the measurement system is given below.
The pigment is dispersed using a muller (plate-type) in an air-drying lacquer system. The lacquer system (lacquer) consists of the following components:

95.26%   Setal® F 48 (binder from Nuplex, medium oil, alkyd resin of petrol / xylene mixture 38 to air dry based on drying vegetable fatty acids in: 7 with a nonvolatile content of about 55% oil content / triglyceride in the non-volatile approximately 48%, phthalic anhydride in the nonvolatile fraction about 26%)

(continued)

| 0.78% | 2-butanone oxime, 55% in mineral spirits (skinning agents) |
| 1.30% | Octa Soligen® calcium (wetting agents, calcium salt of branched $C_6$ - $C_{19}$ - fatty acids in the hydrocarbon mixture (containing 4% Ca; Borchers AG) |
| 0.22% | cobalt Octa Soligen® 6 (dry matter, cobalt (2+) salt of branched $C_6$ - $C_{19}$ fatty acids in a hydrocarbon mixture (containing 6% Co), Borchers AG) |
| 0.87% | zirconium Octa Soligen® 6 (dry matter, zirconium branched $C_6$ -$C_{19}$ fatty acids in a hydrocarbon mixture (containing 6% Zr), Borchers AG) |
| 1.57% | glycolic acid n-butyl ester (= Hydroxyessigsäurebutylester). |

The components are mixed with a high speed to the finished coating. A plate-type (Muller), as in DIN EN ISO 8780-5 (April 1995), is used as described. To apply a ®ENGELSMANN JEL 25/53 muller with an effective plate diameter of 24 cm. The speed of the lower plate is about 75 for at first by attaching a 2.5 kg weight on the loading bar, the force between the plates will be at about 0.5 kN. There are dispersed method described 0.4 g of pigment and 1.00 g of paint in one stage to 100 revolutions with 2.5 kg loading weight in accordance with the DIN EN ISO 8780-5 (April 1995), section. The Muller is opened and the lacquer is swiftly collected on the lower plate outside of the center. At closing further 1.00 g lacquer are added and folded the plate. After two stages at 50 revolutions without loading weight the preparation is completed be.

The pigmented lacquer is coated with a film applicator (gap of at least 150 microns, more than 250 microns) on a non-absorbent cardboard. The varnished cardboard (spread) is then dried at room temperature for at least 12 h. Prior to the color measurement of the spread is dried one hour at about 65 ° C ($\pm$ 5 ° C) and cooled.

Preparation in an alkyd enamel for measuring the brightening.

The pigment and the brightening agent is dispersed with a muller (plate-Farbenausreib machine) in an air-drying lacquer system. As brightening a commercial Tronox RKB 2 titanium dioxide pigment is used. The lacquer system (lacquer) corresponds to that described above.

The components of the coating system are mixed with a high speed to the finished coating.

The pigmented lacquer and the lacquer coating are as described above, with 0.1500 g of pigment to be tested, 0.7500 g Tronox® RKB 2 titanium dioxide pigment and 2.0 gramms of alkyd resin are weighed.

**Colorimeter**

A spectrophotometer ("colorimeter") having the d/8 measuring geometry without a gloss trap was used. This measuring geometry is described in ISO 7724/2-1984 (E), section 4.1.1, in DIN 5033 part 7 (July 1983), section 3.2.4 and in DIN 53236 (January 1983), section 7.1.1.

A DATAFLASH® 2000 measuring instrument (Datacolor International Corp., USA) was employed. The colorimeter was calibrated against a white ceramic working standard, as described in ISO 7724/2-1984 (E) section 8.3. The reflection data of the working standard against an ideally matt-white body are deposited in the colorimeter so that, after calibration with the white working standard, all coloured measurements are related to the ideally matt-white body. The black-point calibration was carried out using a hollow black body from the colorimeter manufacturer.

**Colorimetry**

The result of the colorimetry is a reflection spectrum. As far as the calculation of colorimetric parameters is concerned, the illuminant used to take the measurement is unimportant (except in the case of fluorescent samples). From the reflection spectrum it is possible to calculate any desired colorimetric parameter. The colorimetric parameters $L^*$, $a^*$ and $b^*$ used in this case are calculated in accordance with DIN 6174 (CIELAB values) to the lightsource D65.

A gloss trap, if present, is switched off. The temperature of colorimeter and test specimen was approximately 25°C $\pm$ 5°C.

**Test of Pigment Milling Stability**

0.5g of pigment powder was ground for 2 minutes with a 10 mm agate ball in a vibrating ball mill with a frequency of 2000 min$^{-1}$ made in the Dismembrator R type from Sartorius. A full shade paint drawdown was prepared as above.

**Colorimetric measurements**

Colorimetric measuring is done with the colorimeter Spectraflash 600 plus. The settings are as described above

**Measurement of particle size and aspect ratio:**

The circle equivalent area particle size $x_c$ is determined by analyzing SEM images of isolated or a contiguous monolayer of particles using a suitable PC program (e.g. ImageJ). First the image is suitably preprocessed in order to ensure high contrast between the particles and background. Secondly the image is thresholded in order to obtain a binary image whereby the background is white and the particles black. Then contiguous particles are separated, either manually by drawing white lines between them or, preferably, using an automated function (e.g. Watershed algorithm). Finally each black region corresponding to a single particle is analyzed whereby its area is determined (area A) and an ellipse is fitted to it (major and minor axis length $x_{major}$ and $x_{minor}$). The particle size $x_c$ is determined by $x_c = \sqrt{(4A/\pi)}$. The ellipse aspect ratio is determined by $AR_e = x_{major}/x_{minor}$. Distributions of $x_c$ and $AR_e$ can be determined by measuring a sufficient number of particles and counting them according to their number or mass to form a number- or mass-weighted distribution respectively.

**BET Surface Area**

The BET surface area was determined via the nitrogen sorption in accordance with the multi-point method. Prior to the measurement the sample was outgassed in a stream of dry nitrogen at 120° C for 12 h. The measuring temperature was 77 K.

**Experimental**

**Example 1:** Starting material: Ferric nitrate nonahydrate

100g Ferric nitrate nonahydrate was dissolved in 45 g of 60% nitric acid at 60 °C followed by 24 hours recrystallization at 7 °C and separation and drying of the crystals under vacuum.

**Example 2:** (comparison) Litre scale synthesis and color measurement of spheroidal yellow iron oxide particles

Recrystallized ferric nitrate nonahydrate according to the procedure in Example 1 was used to form 2 L solution of 62 mM ferric nitrate aqueous solution (solvent: ultrapure water). The solution was aged for 24 hours at room temperature. Then two 1 litre low density polyethylene bottles was filled with the half of the solution and placed in an oven already preheated to 60°C. The bottles were removed from the oven after 24 hours (Sample A) and 96 hours (Sample B) respectively. The solids were each washed and recovered according to gravity sedimentation to concentrate to a smaller volume. Subsequently, the suspensions were centrifuged at up to 3000RCF, the supernatant was removed and replacement with pure water. The process was repeated 3 times. Then the solids were dried. The respective samples were imaged by scanning electron microscopy. The mean and standard deviation of the mass weighted distribution are shown in Table 1. The product was coloristically analyzed according to the above mentioned method. Color parameters are shown in Table 1.

**Example 3A:** (present invention) Litre scale synthesis; spheroidal yellow iron oxide

The dried sample A of Example 2 was redispersed in ultrapure water and placed in a Teflon lined autoclave. The concentration of solid in suspension during hydrothermal treatment amounted 0.2 wt%. The autoclave was sealed and heated to 170°C for 20 hours in order to carry out a hydrothermal post-treatment. Following this, the solids were washed and recovered according to Gravity sedimentation to concentrate to a smaller volume. Subsequently, the suspension was centrifuged at up to 3000RCF, the supernatant was removed and replacement with pure water. The process was repeated 3 times. Then the solid was dried. The hydrothermally post-treated product was coloristically analyzed according to the above mentioned method.

**Example 3B:** (present invention) Litre scale synthesis; spheroidal yellow iron oxide

The dried sample B of Example 2 was used in the same way as described under Example 3A.

The colour values of Examples 2A, 2B, 3A and 3B are shown in Table 1. On comparison of the products of Example 2 (comparison) and the inventive Example 3 in Table 1 it is evident that the additional hydrothermal treatment in Examples 3A and 3B leads to an improved color (higher L* and b* values) compared to the respective non-hydrothermally treated products.

Table 1 Samples according to the Invention before (Example 2A&2B) and after (Example 3A&3B) hydrothermal treatment

| Sample | $X_{c,1,3}$ / nm | $AR_E$ | BET surface area m²/g | L* | a* | b* |
|---|---|---|---|---|---|---|
| Example 2 A | 390.4 +/- 33.3 | 1.11 +/-0.074 | 80 | 54.4 | 19.0 | 39.6 |
| Example 3 A | 365.6 +/- 31.0 | 1.12 +/-0.081 | 29 | 56.6 | 18.6 | 43.2 |
| Example 2 B | 370.7+/- 31.0 | 1.20 +/-0.156 | 44 | 57.0 | 18.2 | 42.9 |
| Example 3 B | 366.4 +/- 43.7 | 1.24 +/-0.175 | 16.4 | 58.5 | 17.9 | 45.7 |

Example 4: Comparison of milling stability of spheroidal yellow iron oxide according to invention with needle-like or hedgehog-like pigments as defined below.

Full shade pigment stability was tested for a pigment produced according to the invention (Example 3B), a hedgehog-like pigment according to example 4 of DE-A1-33 26 632 and a needle-like goethite pigment (Bayferrox® 920). In each case full shade measurements were made on a non-milled and milled pigment as mentioned above. The color values are shown in Table 2.

Table 2 Color values of pigments according to the invention and commonly used pigments showing the effect of milling on the color

| | | L* | a* | b* | dL* | da* | db* |
|---|---|---|---|---|---|---|---|
| Example 3B | Non-milled | 58.5 | 17.9 | 45.7 | | | |
| | Milled | 58.2 | 17.9 | 45.4 | -0.3 | 0.0 | -0.3 |
| Comparison (example 4 of DE-A1-33 26 632) | Non-milled | 58.6 | 16.6 | 44.5 | | | |
| | Milled | 58.1 | 14.9 | 41.2 | -0.4 | -1.7 | -3.4 |
| Bayferrox® 920 (needle shaped goethite from Lanxess) | Non-milled | 59.3 | 16.4 | 43.8 | | | |
| | Milled | 59.3 | 15.5 | 42.7 | 0.0 | -1.0 | -1.1 |

## Claims

1. A process for manufacturing goethite containing the steps:

   a) Dissolution of ferric (III) nitrate in water
   b) Treatment of the solution obtained according to step a) at a temperature in the range of 55° to 65° C,
   c) Isolating the goethite from the suspension obtained according to step b)
   d) Suspending the isolated goethite of step c) in water
   e) Treating the suspension of step d) hydrothermally at a temperature of 120 to 220 °C, preferably of 150 to 200 °C under autogenous pressure.

2. The process according to claim 1, **characterized in that** the ferric nitrate used in step a) is ferric nitrate nonahydrate, with a purity of > 99 wt%.

3. The process according to at least one of claims 1 or 2, wherein the water used in step a) for dissolving the ferric nitrate has a total content of alkali and alkaline earth is smaller than 2 ppm.

4. Goethite obtained according to a process according to at least one claim 1 to 3, which has:

   i) an aspect ratio AR of lower than 1.5, preferably lower than 1.3
   ii) a CIELAB L* value of 56 to 60
   iii) a CIELAB b*-value of 42 to 48 and
   iv) preferably an average particle size in the range of 100 to 600 nm.

5. Use of pigments according to claim 4 for colouring products of the ink, paint, coating, building material, plastic and paper industries, in foods, in baking varnishes or coil coatings, in sand granules, sand-lime bricks, enamels and ceramic glazes and in products of the pharmaceutical industry, particularly in tablets.

Europäisches
Patentamt

European
Patent Office

Office européen
des brevets

# EUROPEAN SEARCH REPORT

Application Number

EP 20 20 1761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DE 33 26 632 A1 (BAYER AG [DE]) 7 February 1985 (1985-02-07) * abstract * * page 5, line 13 - page 5, line 16 * * page 5, line 17 - page 5, line 23 * * page 8, line 4 - page 8, line 6 * * examples 2,6,8; table 4 * ----- | 4,5 | INV. C01G49/02 C09C1/24 C01G49/06 |
| Y | DONG FU ET AL: "Iron oxyhydroxide nanoparticles formed by forced hydrolysis: dependence of phase composition on solution concentration", PHYSICAL CHEMISTRY CHEMICAL PHYSICS., vol. 13, no. 41, 1 January 2011 (2011-01-01), page 18523, XP055491901, GB ISSN: 1463-9076, DOI: 10.1039/c1cp20188c * abstract * * page 18524 * * figures 3,5 * ----- | 1-3 | |
| Y | US 3 969 494 A (NOBUOKA SOICHIRO ET AL) 13 July 1976 (1976-07-13) * abstract * * claim 2 * * examples 1-5 * ----- | 1-3 | TECHNICAL FIELDS SEARCHED (IPC) C01G C09C |
| A | JP S58 49694 A (KOGYO GIJUTSUIN) 23 March 1983 (1983-03-23) * the whole document * ----- | 1-5 | |

-/--

The present search report has been drawn up for all claims

| Place of search | Date of completion of the search | Examiner |
|---|---|---|
| The Hague | 9 March 2021 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 20 20 1761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MÜLLER MARCELO ET AL: "Synthesis and characterization of iron oxide pigments through the method of the forced hydrolysis of inorganic salts", DYES AND PIGMENTS, ELSEVIER APPLIED SCIENCE PUBLISHERS. BARKING, GB, vol. 120, 29 April 2015 (2015-04-29), pages 271-278, XP029187701, ISSN: 0143-7208, DOI: 10.1016/J.DYEPIG.2015.04.026 * the whole document * ----- | 1-3 | |

TECHNICAL FIELDS SEARCHED (IPC)

The present search report has been drawn up for all claims

| Place of search | Date of completion of the search | Examiner |
|---|---|---|
| The Hague | 9 March 2021 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 1761

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2021

| Patent document cited in search report | | Publication date | Patent family member(s) | | Publication date |
|---|---|---|---|---|---|
| DE 3326632 | A1 | 07-02-1985 | AU | 566290 B2 | 15-10-1987 |
| | | | BR | 8403636 A | 02-07-1985 |
| | | | DE | 3326632 A1 | 07-02-1985 |
| | | | EP | 0132682 A2 | 13-02-1985 |
| | | | JP | H0532330 B2 | 14-05-1993 |
| | | | JP | S6086031 A | 15-05-1985 |
| | | | US | 4620879 A | 04-11-1986 |
| | | | US | 4698100 A | 06-10-1987 |
| US 3969494 | A | 13-07-1976 | JP | S5328158 B2 | 12-08-1978 |
| | | | JP | S50115698 A | 10-09-1975 |
| | | | US | 3969494 A | 13-07-1976 |
| JP S5849694 | A | 23-03-1983 | JP | S5849694 A | 23-03-1983 |
| | | | JP | S6013975 B2 | 10-04-1985 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2455158 A1

- DE 3326632 A1

**Non-patent literature cited in the description**

- **FU et al.** *Phys. Chem. Chem. Phys.,* 2011, vol. 13, 18523-18529